(19) **Europäisches Patentamt / European Patent Office / Office européen des brevets**

(11) **EP 3 701 589 B1**

(12) **FASCICULE DE BREVET EUROPEEN**

(45) Date de publication et mention
de la délivrance du brevet:
**26.02.2025 Bulletin 2025/09**

(21) Numéro de dépôt: **18789453.0**

(22) Date de dépôt: **26.10.2018**

(51) Classification Internationale des Brevets (IPC):
**H01Q 1/22** $^{(2006.01)}$

(52) Classification Coopérative des Brevets (CPC):
**H01Q 1/2241**

(86) Numéro de dépôt international:
**PCT/EP2018/079460**

(87) Numéro de publication internationale:
**WO 2019/081738 (02.05.2019 Gazette 2019/18)**

(54) **SYSTÈME DE MESURE DE PARAMÈTRE D'UN ENSEMBLE MONTÉ**

PARAMETERMESSSYSTEM FÜR EINE MONTIERTE ANORDNUNG

PARAMETER MEASUREMENT SYSTEM FOR A MOUNTED ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2017 FR 1760160**

(43) Date de publication de la demande:
**02.09.2020 Bulletin 2020/36**

(73) Titulaires:
- **Compagnie Générale des Etablissements Michelin**
  **63000 Clermont-Ferrand (FR)**
- **Safran**
  **75015 Paris (FR)**
- **Safran Landing Systems**
  **78140 Vélizy-Villacoublay (FR)**

- **Safran Electronics & Defense**
  **92100 Boulogne-Billancourt (FR)**

(72) Inventeurs:
- **FAGOT-REVURAT, Lionel**
  **63040 CLERMONT-FERRAND (FR)**
- **DESTRAVES, Julien**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 1 580 041    FR-A1- 2 817 509
US-A1- 2003 132 893

EP 3 701 589 B1

**Description**

**Domaine de l'invention**

La présente invention concerne un système électronique de surveillance de paramètre d'un ensemble monté comprenant une enveloppe pneumatique avion équipée d'un tel système permettant une interrogation à la demande et à distance, sans opérations physiques sur l'ensemble monté.

**Arrière-plan technologique**

Ces dernières années, pour des raisons de sécurité, des modules de roue autour d'une technologie dite TPMS (acronyme en anglais de « Tire Pressure Monitoring System ») se sont développés permettant d'instaurer une communication avec l'ensemble monté pour prévenir les risques d'accident en cas, par exemple, d'une perte de pression de gonflage de l'ensemble monté. Ce sont des dispositifs électroniques de type actif comprenant d'une part des capteurs mesurant des paramètres de la roue comme par exemple la pression de gonflage ou la température du fluide pressurisé contenu entre l'enveloppe pneumatique et la jante et d'autre part des moyens de communication radiofréquences avec une source d'énergie dédiée pour dialoguer avec le véhicule ou une unité de contrôle. Ces modules de roue comprennent aussi généralement une puce électronique et un espace mémoire afin de gérer, post traiter ou stocker des grandeurs du composant roue.

Ces modules de roue, embarqués sur l'un des composants de la roue comme par exemple la jante ou l'enveloppe pneumatique, voient leurs fonctionnalités augmentées régulièrement. Les derniers développements, généralement autour de la technologie TMS (acronyme en anglais de « Tire Mounted Sensor ») proposent de déporter tout ou partie de ce module de roue vers le bloc sommet de l'enveloppe pneumatique.

D'autre part, dans le domaine de l'aviation, les sollicitations thermomécaniques élevées subies par les ensembles montés au moment des phases de décollage et d'atterrissage ainsi que les contraintes réglementaires liées à cette activité rendent complexes l'exploitation de systèmes électroniques en particulier d'éléments mobiles tels que l'on les trouve dans les batteries. D'une part, ces contraintes mécaniques telles que celles générées par les chocs d'impact à l'entrée ou la sortie de l'aire de contact à haute vitesse, engendrent une détérioration prématurée et non maitrisée de ces composants mobiles. D'autre part il faut s'assurer que l'intégration de ces systèmes électroniques ne soit pas dommageable à l'endurance de l'ensemble monté et tout particulièrement à l'enveloppe pneumatique. De ce fait, il faut optimiser l'intégration de ce système électronique au sein de l'ensemble monté.

De plus, les contraintes thermiques violentes liées au freinage rendent la température inhomogène au sein de l'ensemble monté. De ce fait la mesure de la température de la cavité fluide de l'ensemble monté est fortement influencée par la localisation du capteur par rapport à ces sources de chaleur. Par exemple, la mesure de la température à l'aide d'un système TPMS monté sur la valve de jante est fortement perturbée par l'échauffement de la roue lors de la phase de freinage.

Enfin la pression de gonflage des ensembles montés pour l'aviation est très élevée. De ce fait, les opérations manuelles de maintenance de l'ensemble monté sont délicates en raison des risques d'éclatement de l'enveloppe pneumatique en cas de mauvaise manipulation.

**De plus, le document** US2003/132893A1 **divulge un système de communication sans fil équipé d'une antenne radiofréquence pouvant être introduit dans un pneumatique dont le problème technique est de trouver une conception d'antenne radiofréquence peermettant de tenir en endurance par rapport à l'usage du produit auquel le système de communication est associé. Cependant, il convient de noter que le système communicant, dans les cas d'une exploitation sur pneumatique, donne une information partielle sur la pression du pneumatique qu'au travers de la déformation de son antenne de communication engendrée par la variation de la pression de gonflage, n'étant pas lui-même éuipé d'un capteur de pression. De ce fait, il ne délivre pas une information continue des paramètres du pneumatique, comme la pression de gonflage, mais seulement l'atteinte ou le dépassement d'un seuil.**

Le problème technique à résoudre consiste à définir un système électronique de radiocommunication embarqué dans l'ensemble monté qui soit compatible avec les contraintes thermomécaniques de l'ensemble monté et les contraintes réglementaires de l'aviation tout en permettant une communication à tout moment et à distance du système électronique.

**Description de l'invention**

L'invention porte sur un système de mesure de paramètre d'un ensemble monté. selon la revendication 1.

L'ensemble monté est constitué d'une enveloppe pneumatique et d'une roue. Le système de mesure comprend un dispositif électronique de mesure des paramètres de l'ensemble monté et une interface de liaison en matériau élastomère englobant partiellement le dispositif électronique de mesure et servant d'interface entre l'enveloppe pneumatique et le dispositif électronique de mesure. Le dispositif électronique de mesure comprend:

- une antenne radiofréquence UHF ;
- une carte électronique comprenant :

  - une puce électronique couplée à l'antenne radiofréquence UHF ;
  - au moins un capteur de mesure de paramètre de l'ensemble monté ;
  - un microcontrôleur ;
  - un circuit électrique reliant entre eux la puce électronique, le microcontrôleur et le capteur de mesure de paramètre de l'ensemble monté.

Le système de mesure est caractérisé en ce qu'il comprend un plan de masse relié à la carte électronique, en ce que la carte électronique comprend un élément capacitif et un gestionnaire d'énergie, en ce que le couplage entre la puce électronique et l'antenne radiofréquence UHF est de nature électrique et en ce que la puce électronique, le microcontrôleur et le au moins un capteur de mesure des paramètres de l'ensemble monté sont des composants à basse consommation d'énergie.

Le système de mesure permet de communiquer par l'intermédiaire d'un dispositif radiofréquence UHF (acronyme de Ultra Hautes Fréquences) émetteur /récepteur situé à distance de l'ensemble monté. En effet l'antenne radiofréquence est ici une antenne rayonnante fonctionnant en champ lointain autorisant une communication à distance entre le dispositif radiofréquence UHF et le système de mesure en minimisant les contraintes de positionnement entre les deux objets. Ainsi, l'utilisation du système de mesure est plus aisée. La bande UHF est le meilleur compromis possible entre une faible dimension de l'antenne radiofréquence UHF et une distance de lecture radiofréquence convenable. De surcroit la faible dimension de l'antenne radiofréquence facilite son intégration au sein de l'ensemble monté et en particulier dans l'enveloppe pneumatique sans préjudice notable sur l'endurance des diverses structures. Enfin, la faible dimension de l'antenne radiofréquence permet de limiter la masse additionnelle apportée par cette antenne. De plus, l'insertion de l'antenne radiofréquence dans une interface de liaison en mélange élastomère assure un changement de la vitesse de propagation des ondes radioélectriques par rapport au vide amenant à une réduction de la longueur utile de l'antenne radiofréquence. Et, cette interface assure une mise en œuvre facilitée de ce système de mesure aus sein d'une enveloppe pneumatique en particulier en post cuisson de cette enveloppe pneumatique. En effet, l'adhésion élastomère /élastomère facilité l'accrochage de cette interface sur le pneumatique avec ou sans promoteur d'adhésion même quand le pneumatique est dans son état cuit. Enfin, la faible dimension de l'antenne radiofréquence UHF permet de restreindre le volume occupé par l'interface de liaison ce qui facilité aussi son incorporation dans le pneumatique. Ce dispositif radiofréquence comprend d'une part un émetteur radiofréquence à destination du système de mesure et un récepteur radiofréquence à son écoute. Ces deux fonctions peuvent être confondues dans un même instrument de communication. Ce dispositif radiofréquence UHF émet et recoit des ondes radioélectriques dans la bande de fréquence UHF comprise entre 300 MHz et 3 GHz, et tout particulièrement les bandes de fréquences d'environ 430 MHz et comprises entre 860 et 960 MHz qui sont réceptionnées ou envoyées par l'antenne radiofréquence UHF du dispositif électronique de mesure.

L'énergie radioélectrique captée est ensuite transmise en énergie électrique à la puce électronique. L'utilisation d'un couplage électrique entre l'antenne radiofréquence et la puce électronique optimise le rendement du transfert de puissance entre ces composants contrairement à des solutions de couplage électromagnétique tel que l'inductif dont les rendements sont plus faibles.

La puce électronique, le microcontrôleur et le capteur de mesure de paramètre de l'ensemble monté sont dans notre cas des composants à basse consommation d'énergie. On entend ici par le terme « basse consommation » que leur énergie d'activation est faible. En outre leur mode de veille minimise les courants de fuite et leur durée de fonctionnement est faible. De plus la puce électronique optimise le transfert d'énergie vers la carte électronique par l'intermédiaire d'un gestionnaire d'énergie. Celui-ci pilote la charge et la décharge d'un élément capacitif stockant une certaine quantité d'énergie sans avoir les inconvénients structurels d'une batterie. Cependant la quantité d'énergie stockée est nécessairement plus faible que dans une batterie. Le gestionnaire d'énergie libère l'énergie dans la carte électronique lorsqu'un certain niveau seuil de stockage est atteint dans l'élément capacitif. Cette libération d'énergie réveille les composants de la carte électronique encore en veille et lance alors la séquence de mesure. En outre le capteur de mesure optimise sa consommation énergétique par l'intermédiaire du microcontrôleur. Ce système de stockage de l'énergie est nécessaire au fait que le système de mesure est passif et que le capteur de mesure et les composants du système de mesure ont besoin d'énergie pour remplir leur fonction. En raison de l'interrogation à distance, en champ lointain du système de mesure, une partie de l'énergie émise par le dispositif radiofréquence UHF est dissipée du fait en autre de l'éloigneement entre les antennes de communication des deux objets et part d'autre du positionnement aléatoire entre les directions principales des deux antennes. Ces conditions , éloignement et positionnement relative aléatoire des antennes, sont des contraintes imposées pour faciliter l'utilisation du système de mesure. Dans le but aussi de minimiser la consommation énergétique du système de mesure et notamment lorsque celui-ci n'est pas sollicité, les composants eléctroniques du sytème de mesure sont de la catégorie basse consommation d'énergie.

Enfin, la communication émettrice de la puce électronique est de type passif, sans source d'énergie. Le signal émetteur est réfléchi et modulé à partir du signal réceptionné par l'intermédiaire d'une variation d'impédance de la puce électronique.

Au besoin, un convertisseur analogique/numérique est employé entre le microcontrôleur et le capteur de mesure pour transformer l'information numérique en une information analogique à destination ou provenant du capteur de mesure de type analogique. L'information numérique recueillie est transmise ensuite dans l'espace mémoire de la puce électronique avant d'être traduite par cette même puce électronique en un signal électrique spécifique distribué dans l'antenne radiofréquence UHF. Celle-ci transformant le signal électrique en un signal radiofréquence d'émission vers le dispositif récepteur radiofréquence.

Le système de mesure comprend un plan de masse relié à la carte électronique permettant de mettre l'ensemble des composants de la carte électronique à une même référence de tension. Cela permet de minimiser les perturbations parasites sur la globalité de la carte électronique limitant ainsi le bruit de fond sur les mesures du dispositif d'acquisition. De plus, ce plan de masse permet au système de mesure de mieux respecter les contraintes réglementaires de l'aviation en matière de perturbations électromagnétiques.

<u>**L'invention est aussi caractérisée par le fait que**</u> l'antenne radiofréquence UHF est une antenne monobande de type dipôle demi-onde dont la longueur totale L est comprise entre les bornes suivantes :

$$0,9*C/(2*f) < L < 1,1*C/(2*f) \, ,$$

dans lequel, C est la célérité des ondes radioélectriques dans le milieu où est noyé l'antenne radiofréquence UHF (20) et f est la fréquence de communication de l'antenne radiofréquence UHF (20).

Parmi les antennes radiofréquences UHF, l'antenne dipôle demi onde est une antenne de conception élémentaire et bon marché composée principalement par au moins deux brins coaxiaux alignés sur l'axe de l'antenne dont l'une de leurs extrémités est jointe ensemble et s'éloignant l'un de l'autre. De plus, l'intégration de cette antenne de conception élémentaire dans l'enveloppe pneumatique est facilitée par rapport à des antennes directionnelles ou multibandes. La longueur totale L de l'antenne correspond à la demi-longueur d'onde de l'antenne radiofréquence. Lorsque l'antenne est monobande, la fréquence d'utilisation de l'antenne est fixée sur une fréquence centrale avec une largeur de bande étroite. Cela permet de focaliser l'énergie sur un spectre de fréquences étroit maximisant le transfert énergétique entre le dispositif radiofréquence UHF et l'antenne radiofréquence aussi bien en émission qu'en réception. Si la puissance rayonnée vers ou au départ de l'antenne radiofréquence est limitée, ce type de conception est adapté pour transférer le maximum d'énergie rayonnée. Enfin l'antenne dipôle demi-onde permet de rayonner dans un large espace autour de l'antenne aussi bien en émission qu'en réception, c'est une antenne dite omnidirectionnelle. De ce fait, elle est bien adaptée à l'utilisation sur un ensemble monté du fait de la position angulaire aléatoire de l'antenne radiofréquence par rapport au repère terrestre et de la position aléatoire du dispositif radiofréquence UHF par rapport à l'ensemble monté.

Il est à noter que les ondes radioélectriques se déplacent à des vitesses qui dépendent de la nature, en particulier diélectrique, du milieu où l'antenne de communication est localisée. Ainsi, l'antenne radiofréquence du système de mesure étant englobée dans une interface en mélange élastomère, une valeur moyenne de permittivité diélectrique de 5 est pris en compte pour déterminer la célérité C des ondes radioélectriques.

Selon un mode très particulier de réalisation, l'antenne dipôle demi onde est constituée par au moins deux brins dont la longueur du chemin parcouru L0 le long de chaque brin est comprise entre les bornes suivantes :

$$0,5*C/(4*f) < L0 < 2,0*C/(4*f)$$

Dans lequel, C est la célérité des ondes radioélectriques dans le milieu où est noyé le brin et f est la fréquence de communication de l'antenne radiofréquence UHF.

Bien qu'une antenne dipôle demi onde fonctionne sur une fréquence centrale gouvernée par la demi longueur d'onde, l'intégration dans une enveloppe pneumatique d'une antenne dipôle demi-onde cause des perturbations au fonctionnement radiofréquence de l'antenne. En fait la longueur d'onde de l'antenne est à la fois pilotée par la fréquence centrale mais aussi le coefficient de célérité des ondes dans le milieu où l'antenne est noyée. Or, les mélanges élastomères dont est constituée l'interface de liaison mais aussi l'enveloppe pneumatique ont une influence notable sur ce coefficient de célérité en modifiant en particulier la permittivité relative du milieu où se trouve l'antenne radiofréquence. Bien entendu, selon la composition chimique des mélanges élastomères ou des tissus constituées de ces mélanges élastomères, en particulier le taux de carbone, la permittivité diélectrique relative par rapport au vide du milieu change. En raison de l'hétérogénéité des mélanges employés pour l'interface de liaisons et au sein de l'enveloppe pneumatique, de leur géométrie et de la diversité des localisations possibles du système de mesure dans l'enveloppe pneumatique, la gamme de valeur de la longueur du chemin parcouru dans chaque brin de l'antenne est large pour s'adapter à toutes les situations. Dans ce cas, une permittivité relative moyenne pour les mélanges élastomères est prise comme référence, une valeur d'environ 5 est alors définie.

Avantageusement, un brin de l'antenne dipôle demi-onde est compris dans le groupe comprenant linéique, méandre, courbe, hélicoïdal.

Ce sont divers modes de conception du brin de l'antenne dipôle demi-onde. Le plus classique est le brin linéique qui présente le plus faible encombrement spatial en raison de son caractère monodimensionnel. Il permet d'optimiser le transfert énergétique entre l'énergie radioélectrique échangée avec le dispositif radiofréquence et l'énergie électrique transmise à l'antenne radiofréquence. En effet, le rendement est optimal si la totalité de la longueur du brin est parfaitement alignée avec le champ électrique généré par les ondes radioélectriques. Cependant c'est un brin fragile pour des sollicitations mécaniques transverses à la direction du brin. Enfin c'est un brin encombrant dans sa dimension principale par rapport aux dimensions de l'enveloppe pneumatique ne facilitant que moyennement son intégration à cet objet surtout si celui-ci est de petite dimension.

Les solutions de type méandre et courbe rendent compactes le brin en terme de longueur au détriment d'un allongement dans la seconde direction du plan de l'antenne. En effet, ce sont des brins bidimensionnels dont la dimension dans la direction normale au plan du brin est faible par rapport aux autres dimensions du plan du brin. Ces formes facilitent naturellement l'intégration du brin au sein de l'enveloppe pneumatique. De ce fait, l'endurance mécanique de l'enveloppe pneumatique et de l'antenne radiofréquence s'en trouvent améliorée. Cependant, cette amélioration est au détriment du rendement énergétique en raison du non-alignement de la totalité du brin avec la direction du champ électrique générée par les ondes radioélectriques.

Enfin le brin hélicoïdal est un élément structurel tridimensionnel bien adapté pour absorber les déformations thermomécaniques subies par l'enveloppe pneumatique et ce quelle que soit la direction de la sollicitation, assurant ainsi une bonne endurance mécanique de l'antenne radiofréquence et facilitant le positionnement de l'antenne dans l'enveloppe pneumatique. De plus, la compacité du brin obtenue par la troisième dimension facilite l'intégration de l'antenne radiofréquence dans l'enveloppe pneumatique en particulier pour les enveloppes pneumatiques de petite dimension. Cependant, cette compacité est au détriment du rendement du transfert énergétique. Enfin, c'est une antenne complexe en ce qui concerne sa réalisation et son intégration à une carte électronique qui est par nature bidimensionnelle.

En résumé, selon les dimensions de l'enveloppe pneumatique rendant plus ou moins facile l'intégration du brin, de la consommation énergétique du dispositif de mesure et du choix d'implantation du dispositif de mesure dans l'enveloppe pneumatique, il convient de préférer une conception de brin plus qu'une autre. Cependant, il est tout à fait possible de combiner des formes différentes sur le même brin et d'avoir des formes de brin différentes entre les divers brins de l'antenne dipôle demi-onde.

Selon un mode de réalisation spécifique, l'antenne dipôle comprend un brin replié formant une boucle dont le demi-périmètre D du brin défini par la direction de l'antenne radiofréquence UHF, définissant le chemin parcouru L0, est comprise entre les bornes suivantes :

$$0,5*C/(4*f) < D < 2,0*C/(4*f)$$

Où C est la célérité des ondes radioélectriques dans le milieu où le brin est noyé et f est la fréquence de communication de l'antenne radiofréquence UHF.

C'est un autre mode de réalisation d'un brin de l'antenne dipôle demi-onde. C'est un élément structurel bidimensionnel puisque la dimension de la boucle dans la direction normale à la boucle est faible devant les autres dimensions principales de la boucle. Le demi-périmètre est défini à l'aide des points géométriques de la boucle qui se situent à l'intersection de la direction de l'antenne radiofréquence UHF avec la boucle. En raison de l'hétérogénéité des mélanges élastomères de l'interface de liaison et d'une enveloppe pneumatique, de la position du dispositif de mesure par rapport à l'interface de liaison et des diverses positions d'insertion du système de mesure dans l'enveloppe pneumatique, il convient de régler précisément la longueur D au cas par cas pour optimiser l'échange d'énergie entre la puissance rayonnée par le dispositif radiofréquence et l'antenne radiofréquence. Cependant une valeur définie dans l'interface proposée permet d'assurer une quantité d'énergie suffisante pour que le système de mesure fonctionne.

Selon un mode de réalisation très spécifique, la boucle du brin a une forme compris dans le groupe comprenant cercle, ellipse, ovale, rectangle, losange, carré et polygone.

Quelle que soit la forme de la boucle, elle permet de réaliser une boucle fermée définissant un périmètre. Ainsi, on peut adapter la forme de la boucle aux contraintes géométriques du dispositif électronique. En particulier, la proximité de l'antenne rayonnante avec la carte électronique peut influer sur l'espace disponible pour définir la boucle du brin de l'antenne rayonnante. Afin de constituer un dispositif électronique le plus compact possible pour optimiser l'endurance mécanique du dispositif électronique et de l'enveloppe pneumatique devant le recevoir, le concepteur optera pour une architecture de brin particulière en prenant en compte les coûts et les contraintes de fabrication du tel brin.

Selon un autre mode de réalisation très particulier, la boucle de demi-périmètre D est intégrée dans le plan de masse du circuit électrique.

C'est un mode de réalisation très particulier où la dimension du plan de masse permet de l'utiliser comme brin de l'antenne dipôle. Cette structure du brin améliore la tenue mécanique du brin de l'antenne et de surcroît minimise les couts de fabrication de l'antenne dipôle.

Avantageusement, un chemin orienté L1 du brin représentant au moins 50% du chemin parcouru L0 du au moins un brin est orienté dans la direction de l'antenne radiofréquence UHF.

Si la longueur du chemin parcouru L0 permet de centrer la fréquence de résonance de l'antenne rayonnante sur la fréquence centrale du dispositif radiofréquence en communication avec elle, il est aussi possible d'améliorer l'efficacité énergétique du transfert entre ces deux structures en alignant l'axe de l'antenne rayonnante avec le champ électrique du dispositif radiofréquence. Bien entendu, l'efficacité est maximale si le champ électrique du dispositif radiofréquence est constant et que l'antenne rayonnante est parfaitement alignée. Cependant si 50% de la longueur du brin est alignée, le rendement est suffisant pour que le dispositif électronique fonctionne. C'est un compromis entre l'efficacité du transfert énergétique depuis le dispositif radiofréquence vers le dispositif électronique et l'endurance mécanique de l'antenne rayonnante insérée dans une enveloppe pneumatique.

Très avantageusement, un chemin orienté optimal L2 représentant au moins 70% , préférentiellement 80%, du chemin orienté L1 du brin est continu. De plus, le chemin orienté optimal L2 est localisé dans la partie du brin comprenant l'extrémité du brin fixée à la puce électronique.

Ces caractéristiques distinctives ont des effets similaires et additionnels sur le transfert énergétique entre l'antenne rayonnante et le dispositif radiofréquence. En effet, ces caractéristiques augmentent l'interaction entre le champ électrique du dispositif radiofréquence et l'intensité du courant électrique circulant dans l'antenne rayonnante, ce courant communiquant directement avec le circuit électrique du dispositif électronique.

Selon un mode de réalisation spécifique, une partie de la carte électronique, du plan de masse et de l'antenne radiofréquence UHF sont enrobés dans une masse en parylène.

Les éléments du système de mesure sont fragiles de par leur structure elle-même ou de leurs connexions. Le système de mesure à vocation à être inséré dans une enveloppe pneumatique avion dont les sollicitations thermomécaniques sont élevées. Par conséquent, l'insertion dans une masse en parylène, par nature rigide, de ces éléments renforce l'endurance mécanique de ces éléments dans un environnement fortement sollicitant.

De plus, certains composants de la carte électronique tels que les capteurs de mesure peuvent nécessiter d'être en contact avec le fluide extérieurement délimité par le système de mesure. Or ce fluide n'est pas parfait par nature. Le fluide peut avoir un taux d'humidité variable mais aussi des saletés ou des impuretés pouvant influencer la réponse du capteur de mesure. De même, l'antenne rayonnante et le plan de masse du système de mesure peut être en contact direct avec ce fluide et subir les mêmes types d'agressions physico chimiques. Pour ces raisons, la protection hermétique apportée par le parylène est efficace.

Selon un mode de réalisation préférentiel, l'antenne radiofréquence UHF est connectée à un circuit d'adaptation d'impédance situé entre l'antenne radiofréquence UHF et la puce électronique.

Le circuit d'adaptation d'impédance améliore le transfert d'énergie entre l'antenne radiofréquence UHF et la puce électronique en minimisant les pertes d'énergie entre ces deux composants. Cela permet d'augmenter réellement l'énergie électrique transmise à la puce électronique et donc à la carte électronique. Cette adaptation est particulièrement nécessaire en cas de déséquilibre de l'antenne rayonnante comme le cas où les deux brins du dipôle demi-onde sont de conception différente. Elle permet d'équilibrer l'antenne rayonnante et d'adapter l'impédance de l'antenne rayonnante à la puce électronique. Cette adaptation est réalisée à l'aide de circuits idéalement purement capacitifs ou inductifs mis en combinaison entre eux selon le besoin d'adaptation.

Selon un mode de réalisation particulier, l'interface de liaison est équipée d'un orifice traversant mettant en communication le fluide situé extérieurement au système de mesure et au moins une zone active du au moins un capteur de mesure de paramètre de l'ensemble monté.

En effet, si le capteur de mesure de l'ensemble monté s'intéresse aux propriétés chimio physiques de la cavité fluide pressurisée formée par l'ensemble monté telle que la pression de gonflage, il faut que ces capteurs soient en connexion avec cette cavité fluide. L'interface de liaison s'intercalant entre l'enveloppe pneumatique et le dispositif électronique, l'orifice permet de mettre en communication la partie active du capteur de mesure avec la cavité fluide.

Selon un autre mode de réalisation particulier, le capteur de mesure de paramètre de l'ensemble monté est compris dans le groupe comprenant capteur de pression, capteur de température, capteur de position verticale, capteur de position angulaire, capteur accélérométrique.

Parmi les capteurs de mesure des paramètres de l'ensemble monté, les plus usuellement employés sont les capteurs de pression et de température puisqu'ils s'intéressent directement à des grandeurs physiques en lien direct avec l'usage et le bon fonctionnement de l'ensemble monté ou de l'enveloppe pneumatique. Les capteurs de température mesurent soit la température du fluide de la cavité interne de l'ensemble monté ou soit la température de certaines zones spécifiques de l'enveloppe pneumatique. Cependant d'autres capteurs de mesure tels que les capteurs accélérométriques, les capteurs de position peuvent aussi être employés afin d'aider au diagnostic du bon usage de l'ensemble monté ou de l'enveloppe pneumatique ou de l'état de l'ensemble monté au moment de la prise de mesure par un autre capteur.

L'invention porte aussi sur une enveloppe pneumatique équipée d'un tel système de mesure de paramètre d'un ensemble monté dans lequel l'enveloppe pneumatique est destinée à un usage aérien.

L'enveloppe pneumatique a une conception adaptée aux contraintes thermomécaniques de l'usage aérien. Celle-ci comprend un système de mesure de paramètre d'un ensemble monté. Le système de mesure est lié à l'enveloppe pneumatique par l'intermédiaire de l'interface de liaison en matériau élastomère. Dans certains modes de réalisation le système de mesure est situé au sein même de l'enveloppe pneumatique si le capteur de mesure de paramètre de l'ensemble monté n'a pas besoin d'une communication directe avec la cavité fluide de l'ensemble monté. Dans d'autres modes de réalisation, il est fixé sur la surface intérieure de l'enveloppe pneumatique si le dispositif de mesure comprend des capteurs spécifiques tels qu'un capteur de pression ou des capteurs de température caractérisant le fluide de cette cavité.

## Description brève des dessins

L'invention sera mieux comprise à la lecture de la description qui va suivre donnée uniquement à titre d'exemple et faite en se référant aux figures annexées dans lesquelles les mêmes numéros de référence désignent partout des parties identiques et dans lesquelles :

- La figure 1 présente un synoptique du dispositif électronique selon l'invention.
- La figure 2 est une vue en coupe du système de mesure selon l'invention.
- .La figure 3 est une vue de dessus d'un brin de l'antenne rayonnante de type dipôle.
- La figure 4 est une vue de dessus d'une boucle formant le brin d'une antenne dipôle selon l'invention.

## Description détaillée de modes de réalisation

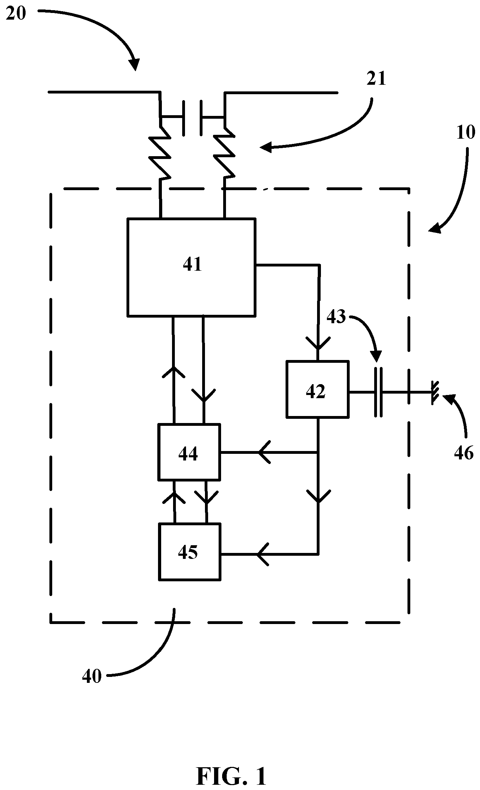

Sur la figure 1, on distingue un synoptique du dispositif électronique 10 du système de mesure de paramètre de l'ensemble monté. D'une part, la partie radiocommunication comprend une antenne rayonnante UHF 20 qui est connectée à la carte électronique 40 par l'intermédiaire de la puce électronique 41. Au besoin, un circuit d'adaptation d'impédance 21 est intercalé entre ses deux composants pour les coupler efficacement et optimiser le transfert de l'énergie électrique.

La carte électronique 40 comprend un premier sous ensemble assurant la gestion énergétique .Ce sous ensemble comprend d'une part un gestionnaire d'énergie 42 qui sert d'interface entre la puce électronique 41 et l'élément capacitif 43. En effet, l'énergie électrique fournie à la puce électronique 41est dirigée vers le gestionnaire d'énergie 42 qui oriente le flux énergétique vers l'élément capacitif 43. Cet élément capacitif 43 est le réservoir énergétique de la carte électronique 40. Lorsque l'élément capacitif 43 a atteint un certain seuil permettant de mettre en fonctionnement la carte électronique 40, l'énergie de l'élément capacitif 43 est libérée dans la carte électronique 40 par l'intermédiaire du gestionnaire d'énergie 42.

La carte électronique 40 comprend aussi un second sous ensemble assurant la mesure et le post traitement de cette mesure comprenant tout d'abord depuis la puce électronique 41 un microcontrôleur 44. Ce microcontrôleur 44 assure la communication d'information entre la puce électronique 41 et le capteur de mesure de paramètre de l'ensemble monté 45. Au minimum, la communication depuis le microcontrôleur 44 vers la puce électronique 41 est réalisée. Souvent, la communication est dans les deux sens. En effet, soit la puce électronique 41 envoie une instruction parmi une liste d'instructions au microcontrôleur 44, soit la puce électronique 41 envoie l'information reçue du microcontrôleur 44, celui-ci vérifie que l'information transmise est conforme. Le microcontrôleur 44 est aussi en communication avec le capteur de mesure 45. La communication est au minimum depuis le capteur de mesure 45 vers le microcontrôleur 44. Souvent elle est bilatérale pour acquitter l'information transmise ou transmettre une opération au capteur de mesure parmi une liste d'opérations possibles à effectuer telles que par exemple, réaliser une mesure ou communiquer le contenu partiel ou totale de la mémoire du capteur de mesure 45 ou toute autre tâche à réaliser par le capteur de mesure 45.

En dehors de ces deux premiers sous-ensembles connectés entre eux par l'intermédiaire du circuit électrique 47, la carte électronique 40 est reliée à un plan de masse 46. Bien entendu le circuit électrique 47 relie de manière galvanique l'ensemble des éléments de la carte électronique 40. Il est à noter que lorsque le capteur de mesure 45 est de type analogique, un convertisseur numérique/analogique est incorporé entre le microcontrôleur 44 et le capteur de mesure 45 afin de décoder ou encoder l'information entre le mode numérique propre à la puce électronique 41 et le mode analogique du capteur de mesure 45. Enfin le gestionnaire d'énergie 42 transmet l'énergie nécessaire au bon fonctionnement de la carte électronique 40 vers au moins le microcontrôleur 44 qui la redistribue alors au capteur de mesure. Mais le gestionnaire d'énergie peut comme indiqué sur le synoptique aussi alimenter directement le capteur de mesure 45 et au besoin le convertisseur numérique/ analogique.

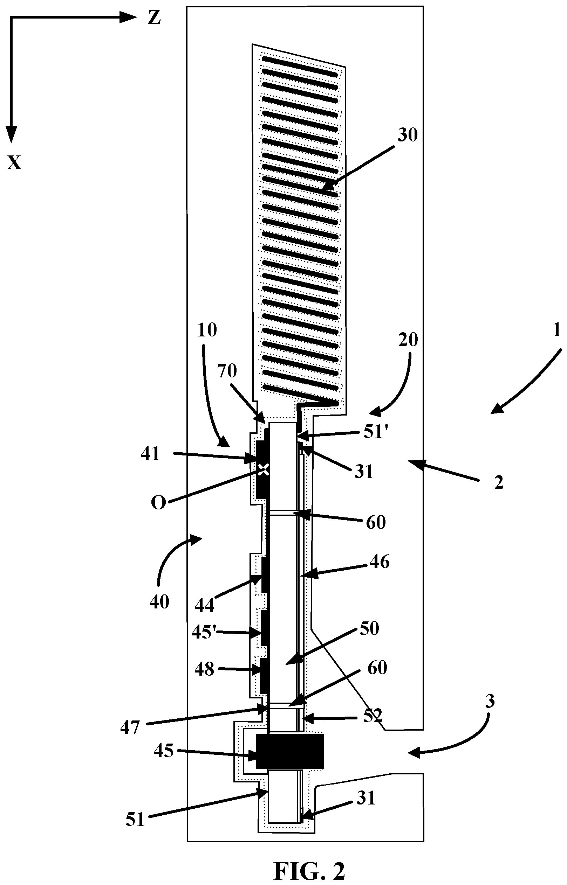

La figure 2 est une coupe du système de mesure 1 de paramètre de l'ensemble monté selon le plan OXZ. La direction X est la direction de l'antenne rayonnante UHF 20 qui est ici un dipôle demi-onde. La direction Z est la direction verticale à la carte électronique 40. Enfin, le point O est le centre de la puce électronique 41. Celle-ci se présente classiquement sur la forme d'un parallélépipède dont la direction verticale Z correspond à sa plus petite dimension.

Ce système de mesure 1 comprend une interface de liaison 2 englobant l'antenne rayonnante 20, le plan de masse 46 et la carte électronique 40. Cette interface de liaison 2 est une masse en mélange élastomère. Ainsi toutes les solutions d'adhésion élastomère/élastomère pourront être employées pour fixer le système de mesure 1 à l'enveloppe pneumatique. L'interface de liaison 2 comporte un orifice traversant 3 mettant en communication le fluide situé à l'extérieur de l'interface de liaison 2 avec le capteur de mesure 45 de type capteur de pression et de température dont la mesure se focalise sur les propriétés de ce fluide.

Dans cette configuration, le système de mesure 1 comprend aussi un premier brin 30 métallique de type hélicoïdal connecté à la carte électronique 40. L'ancrage mécanique de ce brin hélicoïdal 30 est réalisé par l'intermédiaire d'un orifice traversant verticalement le circuit imprimé 50 et d'une soudure de ce brin 30 métallique sur une pastille métallique comme par exemple du cuivre compris dans le circuit électrique 47 de la carte électronique 40. Le premier élément de la carte électronique 40 relié par l'intermédiaire du circuit électrique 47 à cette pastille est la puce électronique 41. Celle-ci est aussi connectée par l'intermédiaire du circuit électronique 47 à un second brin 31 de l'antenne rayonnante.

Ce brin 31 est ici une boucle circulaire métallique, c'est donc une structure surfacique dont le plan contient l'axe de rotation du premier brin 30 hélicoïdal et dont la direction principale de la boucle est parallèle à l'axe de rotation du premier brin 30. Ainsi les deux brins 30 et 31 constituent bien une antenne rayonnante de type dipôle. La longueur du chemin parcouru le long de chaque brin est adaptée à une fréquence centrale de communication d'environ 433Mhz lorsque le système de mesure est incorporé dans une enveloppe pneumatique au niveau de l'un de ses flancs.

La carte électronique 40 est construite à partir d'un circuit imprimé 50 dont l'une des faces métalliques 51, ici du cuivre, a été chimiquement attaquée afin de constituer le circuit électrique 47 constitué de fils conducteurs reliant des pastilles de connexion où sont reliés les divers éléments du dispositif électronique 10. Ces pastilles peuvent être pleines ou creuses selon le système d'ancrage de l'élément au circuit imprimé 50. Dans le cas du brin hélicoïdal 30 et de la boucle 31, les pastilles sont creuses. Dans le cas du gestionnaire d'énergie ou de l'élément capacitif ou du microcontrôleur 44, elles sont pleines, ces éléments étant fixés au circuit imprimé 50 par collage. L'autre face 51'du circuit imprimé 50 est recouvert par une feuillard bicouche dont la couche supérieure 52 est métallique afin de constituer le plan de masse 46. Ici, le plan de masse 46 est dissocié de la boucle 31constituant le second brin de l'antenne rayonnante bien que les deux éléments étaient initialement joints sur la couche supérieure 52 du feuillard. Une attaque chimique sur la couche métallique 52 du feuillard bicouche a permis de les dissocier physiquement et électriquement par l'intermédiaire de la couche inférieure isolante du feuillard.

La connexion entre le plan de masse 46 et la carte électronique est réalisé par des éléments de connexion 60 reliant la surface supérieure 52 à la surface inférieure 51 du circuit imprimé . La connexion au niveau de la surface inférieure 51 s'effectuant au niveau du circuit électrique 47.

La première face 51 du circuit imprimé 50 accueille les divers éléments de la carte électronique 40. Ceux-ci sont fixés mécaniquement au circuit imprimé 50 et connectés électriquement au circuit électrique 47. Ici seul le sous-ensemble assurant la mesure est représenté sur la figure 2. En premier lieu, directement connecté à la puce électronique 41, se situe le microcontrôleur 44. Ensuite un capteur de mesure 45 de type capteur de pression est connecté au microcontrôleur 44 et situé entre les deux composants un convertisseur analogique/ numérique 48. Un second capteur de mesure 45' de type accéléromètre numérique est directement connecté de manière galvanique au microcontrôleur 44.

Il est à noter que le capteur de pression 45 est positionné de part et d'autre du circuit imprimé 50. En effet, il est connecté électriquement au circuit imprimé électrique 47 sur la première face 51 du circuit imprimé 50. Mais, la partie active du capteur de pression 45 est située au-dessus de la couche supérieure 52 du feuillard bicouche selon la direction Z. L'ancrage du capteur de pression 45 se faisant postérieurement à la connexion des autres composants électroniques.

Une couche de protection 70 est alors nécessaire pour protéger ces éléments des agressions physico chimiques de l'environnement extérieur au système de mesure 1. Cette protection 70 est réalisée à base de parylène déposée par condensation par-dessus l'ensemble constitué de la carte électronique 40 complète, du plan de masse 46 et de l'antenne radiofréquence 20. Ce procédé de pose permet d'assurer une épaisseur constante de protecteur sur toute la surface externe et de faible épaisseur. Ainsi, on assurer une protection maximale pour une masse minimale de protecteur. Préalablement la zone active du capteur de pression 45 a été protégée afin de ne pas être recouverte par cette protection 70. Le parylène assure à la fois une protection mécanique mais aussi une herméticité aux pollutions solides et liquides. Enfin, ce protecteur 70 est compatible avec les mélanges élastomères constituant l'interface de liaison 2. Bien entendu d'autres protecteur tel que la résine époxy aurait pu convenir mais leur mise en oeuvre n'aurait pas été aussi interessante que le parylène.

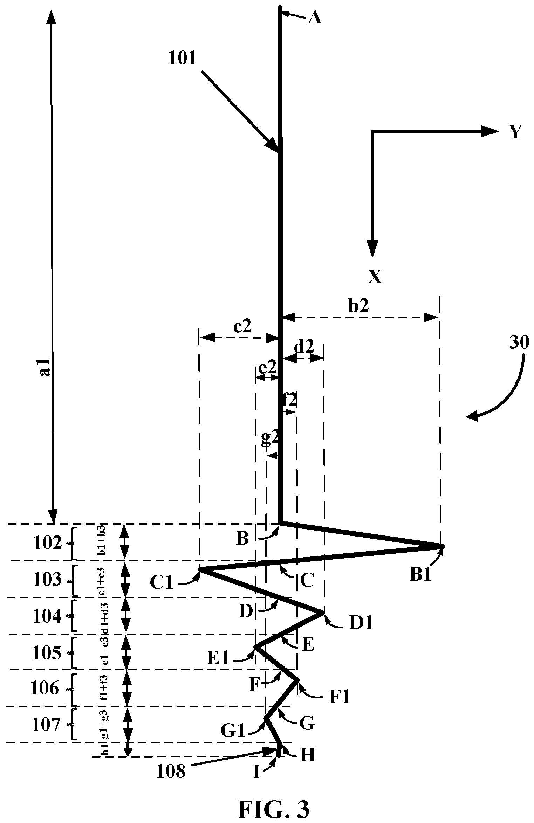

La figure 3 est un exemple de brin 30 d'une antenne rayonnante UHF dans une configuration optimale en matière d'efficacité énergétique. Celle-ci est une structure bidimensionnelle s'intégrant parfaitement au système de mesure de paramètre de l'ensemble monté. Les deux extrémités A et 1 du brin définissent l'axe de X représentant l'axe de l'antenne rayonnante. L'axe Y est la direction perpendiculaire à l'axe X dans le plan du brin 30. Le point A correspond ici au point d'alimentation du brin 30 d'une antenne radiofréquence UHF du dispositif.

Elle comprend un fil métallique présentant tout d'abord une section rectiligne 101 entre les points A et B d'une longueur représentant 50% de la longueur totale du brin Le point A est l'extrémité du brin 30 qui sera connectée de manière galvanique à la puce électronique. La seconde partie du brin 30 entre les point B et H est une structure de type méandre droit se terminant par une section rectiligne entre les points H et 1 représentant 0,5% de la longueur totale du brin 30. En fait, la section entre les points B et H est une succession de méandres 102, 103, 104,105, 106 et 107 dont la dimension dans la direction X est constante et d'une valeur équivalente à 1,5% de la longueur du brin 30. Mais la dimension dans la direction Y est continument décroissante. Par exemple, le méandre 103 est délimité par les points C et D. Pour chaque méandre, le chemin parcouru le long du méandre peut se décomposer en une composante selon la direction X et une composante selon la direction Y. La composante X de chaque méandre est de par la construction de ce brin constante et a une valeur équivalente à 3% de la longueur du brin 30. Mais la composante Y de chaque méandre en partant de l'extrémité B vers l'extrémité H est continument décroissante d'un facteur 2 avec une dimension maximale sur le méandre 102 équivalente à 8% de la longueur du brin 30. Cette composante X pour le méandre 104 est la sommation des distances élémentaires d1 et d3. Pour la composante Y de ce même méandre 104, c'est deux fois la distance élémentaire d2. Les formules des composantes X et Y seront similaires d'un méandre à l'autre.

De ce fait, le chemin parcouru L0 le long de ce brin 30 est alors la distance complète du brin 30.Ce chemin parcouru L0 est alors obtenu par la formule suivante :

$$L0 = a_1 + \sum_{i=b}^{g} (i_1 + 2 * i_2 + i_3) + h_1$$

La valeur de L0 est d'environ 80 millimètres qui est bien comprise dans l'intervalle souhaité pour une antenne rayonnante dipôle demi-onde fonctionnant à la fréquence de 900 MHz.

Le chemin orienté L1 de ce brin correspond à la distance parcourue selon l'unique direction X qui est l'axe de l'antenne rayonnante. Ce chemin L1 est alors simplement défini par la formule suivante :

$$L1 = a_1 + \sum_{i=b}^{g} (i_1 + i_3) + h_1 = 0{,}685 * L0$$

La valeur de L1 représente environ 70 pourcents du chemin parcouru L0 totale le long du brin 30. Ainsi la majorité du brin 30 aura pour vocation à accélérer les charges électriques situées sur le brin 30 à l'aide du champ électrique du dispositif radiofréquence.

Enfin le chemin orienté optimal L2 de ce brin 30 qui correspond à la plus grande portion continue du brin 30 parfaitement alignée avec la direction X correspondant à l'axe de l'antenne rayonnante est alors définie par la formule suivante :

$$L2 = a_1 = 0{,}5 * L0$$

Le chemin orienté optimal L2 est bien à plus de 70 pourcents du chemin orienté L1 du brin 30 de l'antenne rayonnante. De plus, ce chemin orienté optimal L2 comprend l'extrémité A du brin qui sera placé au droit de la connexion électrique vers la puce électronique.

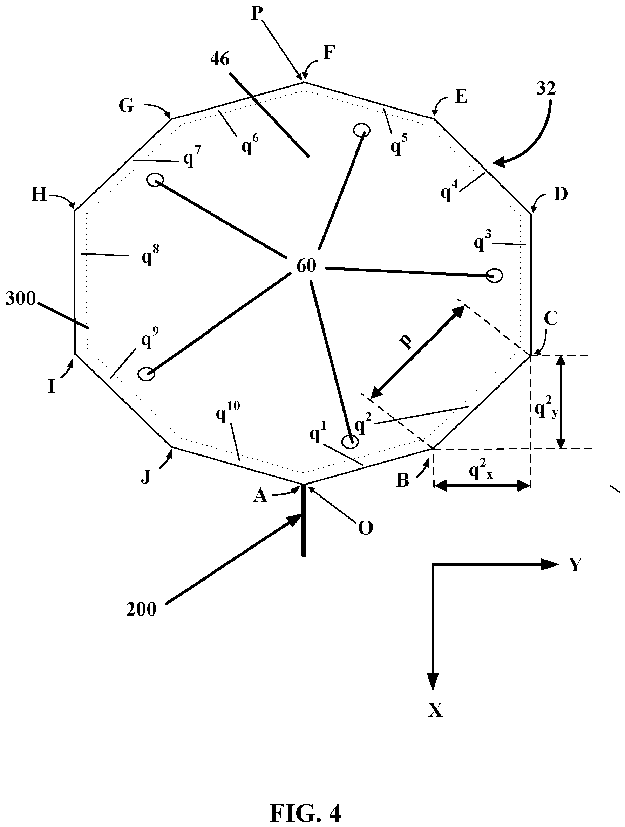

La figure 4 est une vue de dessus d'un brin 32 de l'antenne rayonnante UHF intégré dans le plan de masse 46 du dispositif électronique. Le plan de masse 46 est ici délimité par un hexagone régulier définissant une surface totale d'environ 500 millimètres carrées. Le plan de masse 46 présente sur sa face cinq éléments de connexion 60 entre le plan de masse 46 et la carte électronique permettant d'assurer la connexion électrique. A une extrémité de l'hexagone se trouve une section rectiligne de petite dimension 200 qui sera négligée pour l'évaluation des chemins du brin. Un alignement de cette section rectiligne 200 avec l'axe de l'antenne radiofréquence UHF est souhaitable pour réaliser une antenne dipôle demi-onde dont un premier brin sera la boucle 32 intégrée au plan de masse 46. Cet alignement représente l'axe L'extrémité laissée libre de cette section rectiligne 200 représente un point d'alimentation de l'antenne radiofréquence UHF. La direction Y est orthonormale aux directions X et Z où Z est la direction normale du plan de masse 46 dirigé extérieurement à la carte électronique.

Chaque extrémité de l'hexagone est définie par une lettre de A à J suivant le sens direct de parcours de l'hexagone dans le plan XY. Chaque segment $q^i$ de l'hexagone a une longueur p qui selon l'orientation du segment de longueur p dans le plan XY définit une composante $q_x^i$ selon la direction X et une composante $q_y^i$ selon la direction Y.

Le brin boucle 32 est alors localisé fictivement sur la périphérie du plan de masse 46. En effet, cette zone correspond à la surface de déplacement des charges électriques situées sur le plan de masse 46 lorsque celui-ci est placé dans un champ électrique E parallèle au plan de masse 46. La ligne de points 300 représente fictivement l'épaisseur de cette boucle 32 afin de la visualiser sur la figure 4.

L'intersection de la boucle 32 avec l'axe X définit un premier point O et un second point P en partant de la section rectiligne 200. La distance définie par l'hexagone régulier entre ces deux points est constante quel que soit le sens de parcours de l'hexagone régulier. Cette distance parcourue correspond à la fois au demi périmètre D de la boucle 32 mais aussi au chemin parcouru L0 de la boucle 32. Cette distance est définie, en se limitant aux segments $q^1$ à $q^5$ de l'hexagone régulier, par la formule suivante :

$$L0 = \sum_{i=1}^{5} q^i = 5p$$

Il est alors facile de déterminer le chemin orienté L1 de la boucle 32 en se focalisant sur les projections des segments de l'hexagone régulier selon la direction X. Ainsi le chemin orienté L1 est obtenu à l'aide la formule suivante :

$$L1 = \sum_{i=1}^{5} q_x^i = 3,72 * p = 0,74 * L0$$

Ce brin 32 de type boucle permet d'obtenir un chemin orienté correcte pour obtenir une efficacité énergétique suffisante. Cependant, celle-ci n'est pas optimale du fait de l'orientation du brin boucle 32. Cependant, la forme particulière de cette antenne assure une compacité du système de mesure au plus juste en faisant jouer au plan de masse 46 un premier rôle de régulateur électrique de la carte électronique et un second rôle de brin radiofréquence.

**Revendications**

**1.** Système de mesure (1) de paramètre d'un ensemble monté constitué d'une enveloppe pneumatique et d'au moins une roue, comprenant un dispositif électronique (10) de mesure des paramètres de l'ensemble monté et une interface de liaison (2) en matériau élastomère englobant au moins partiellement le dispositif électronique (10) de mesure et servant d'interface entre l'enveloppe pneumatique et le dispositif électronique (10) de mesure, ledit dispositif électronique (10) de mesure comprenant :

- une antenne radiofréquence UHF (20) ;
- une carte électronique (40) comprenant :

    i. une puce électronique (41) couplée à l'antenne radiofréquence UHF(20), le couplage entre la puce électronique (41) et l'antenne radiofréquence UHF (20) est de nature électrique ;
    ii. un microcontrôleur (44) ;

**caractérisé en ce que** le système de mesure (1) comprend un plan de masse (46) relié à la carte électronique (40), **en ce que** la carte électronique (40) comprend au moins un capteur de mesure (45) de paramètre de l'ensemble monté, un élément capacitif (43) et un gestionnaire d'énergie (42), **en ce que** un circuit électrique (47) relie entre eux la puce électronique (41), le microcontrôleur (44) et au moins le capteur de mesure (45) de paramètre de l'ensemble monté, **en ce que** la puce électronique (41), le microcontrôleur (44) et le au moins un capteur de mesure (45) des paramètres de l'ensemble monté sont des composants à basse consommation d'énergie **et en ce que** l'antenne radiofréquence UHF (20) est une antenne monobande de type dipôle demi onde dont la longueur totale L est comprise entre les bornes suivantes :

$$0,9*C/(2*f) < L < 1,1*C/(2*f) \, ,$$

dans lequel, C est la célérité des ondes radioélectriques dans le milieu où est noyé l'antenne radiofréquence UHF (20) et f est la fréquence de communication de l'antenne radiofréquence UHF (20) .

2. Système de mesure (1) de paramètre d'un ensemble monté selon la revendication 1 dans lequel l'antenne (20) dipôle demi onde est constituée par au moins deux brins (30) dont la longueur du chemin parcouru L0 le long de chaque brin (30) est comprise entre les bornes suivantes :

$$0,5*C/(4*f) < L0 < 2,0*C/(4*f) \,,$$

dans lequel, C est la célérité des ondes radioélectriques dans le milieu où est noyé le brin (30) et f est la fréquence de communication de l'antenne radiofréquence UHF (20).

3. Système de mesure (1) de paramètre d'un ensemble monté selon la revendication 2 dans lequel la forme du au moins un brin (30) de l'antenne (20) dipôle demi onde est compris dans le groupe comprenant linéique, méandre, courbe, hélicoïdal.

4. Système de mesure (1) de paramètre d'un ensemble monté selon la revendication 1 dans lequel l'antenne (20) dipôle comprend au moins un brin (31, 32) replié formant une boucle dont le demi périmètre D du brin défini par la direction de l'antenne (20) dipôle, définissant le chemin parcouru L0, est comprise entre les bornes suivante :

$$0,5*C/(4*f) < D < 2,0*C/(4*f)$$

où C est la célérité des ondes radioélectriques dans le milieu où le brin (31, 32) est noyé et f est la fréquence de communication de l'antenne radiofréquence UHF (20).

5. Système de mesure (1) de paramètre d'un ensemble monté selon la revendication 4 dans lequel la boucle (31, 32) a une forme compris dans le groupe comprenant cercle, ellipse, ovale, rectangle, losange, carré et polygone.

6. Système de mesure (1) de paramètre d'un ensemble monté selon l'une des revendications de 4 à 5 dans lequel la boucle (31, 32) de demi périmètre D est intégrée dans le plan de masse (46).

7. Système de mesure (1) de paramètre d'un ensemble monté selon les revendications 3 à 6 dans lequel un chemin orienté L1 du brin (30, 31, 32) représentant au moins 50% du chemin parcouru L0 du brin (30, 31, 32) est orienté dans la direction de l'antenne radiofréquence UHF (20).

8. Système de mesure (1) de paramètre d'un ensemble monté selon la revendication 7 dans lequel un chemin orienté optimal L2 représentant au moins 70% du chemin orienté L1 du brin (30, 31, 32) est continu.

9. Système de mesure (1) de paramètre d'un ensemble monté selon la revendication 8 dans lequel le chemin orienté optimal L2 est localisé dans une première partie du brin (30, 31, 32) comprenant l'extrémité du brin fixée à la puce électronique (41).

10. Système de mesure (1) de paramètre d'un ensemble monté selon l'une des revendications précédentes dans lequel au moins une partie de la carte électronique (40), du plan de masse (46) et de l'antenne radiofréquence UHF (20) sont enrobées dans une masse (70) en parylène.

11. Système de mesure (1) de paramètre d'un ensemble monté selon l'une des revendications précédentes dans lequel l'antenne radiofréquence UHF (20) est connectée à un circuit d'adaptation d'impédance (21) situé entre l'antenne radiofréquence UHF(20) et la puce électronique (41).

12. Système de mesure (1) de paramètre d'un ensemble monté selon l'une des revendications précédentes dans lequel l'interface de liaison (2) est équipée d'au moins un orifice traversant (3) mettant en communication le fluide situé extérieurement audit système de mesure et au moins une zone active du au moins un capteur de mesure (45) de paramètre de l'ensemble monté.

13. Système de mesure (1) de paramètre d'un ensemble monté selon l'une des revendications précédentes dans lequel le au moins un capteur de mesure (45) de paramètre de l'ensemble monté est compris dans le groupe comprenant capteur de pression, capteur de température, capteur de position verticale, capteur de position angulaire, capteur accélérométrique.

**Patentansprüche**

1. Messsystem (1) zum Messen eines Parameters einer montierten Anordnung, die aus einem Luftreifen und mindestens einem Rad besteht, umfassend eine elektronische Messvorrichtung (10) zum Messen der Parameter der montierten Anordnung und eine Verbindungsschnittstelle (2) aus Elastomermaterial, welche die elektronische Messvorrichtung (10) mindestens teilweise umschließt und als Schnittstelle zwischen dem Luftreifen und der elektronischen Messvorrichtung (10) dient, wobei die elektronische Messvorrichtung (10) umfasst:

   - eine UHF-Hochfrequenzantenne (20);
   - eine Elektronikkarte (40), umfassend:

      i. einen elektronischen Chip (41), der mit der UHF-Hochfrequenzantenne (20) gekoppelt ist, wobei die Kopplung zwischen dem elektronischen Chip (41) und der UHF-Hochfrequenzantenne (20) elektrischer Art ist;
      ii. einen Mikrocontroller (44);

      **dadurch gekennzeichnet, dass** das Messsystem (1) eine Masseebene (46) umfasst, die mit der Elektronikkarte (40) verbunden ist, dass die Elektronikkarte (40) mindestens einen Messsensor (45) zum Messen eines Parameters der montierten Anordnung, ein kapazitives Element (43) und einen Energiemanager (42) umfasst, dass eine elektrische Schaltung (47) verbindet den elektronischen Chip (41), den Mikrocontroller (44) und mindestens den Messsensor (45) zum Messen eines Parameters der montierten Anordnung, dass der elektronische Chip (41), der Mikrocontroller (44) und der mindestens eine Messsensor (45) zum Messen der Parameter der montierten Anordnung Bauteile mit niedrigem Energieverbrauch sind und dass die UHF-Hochfrequenzantenne (20) eine Monobandantenne vom Typ Halbwellendipol ist, deren Gesamtlänge L zwischen den folgenden Grenzen liegt:

$$0,9*C/(2*f)<L< 1,1*C/(2*f),$$

   worin C die Geschwindigkeit der Funkwellen in dem Milieu ist, in das die UHF-Hochfrequenzantenne (20) eingebettet ist, und f die Kommunikationsfrequenz der UHF-Hochfrequenzantenne (20) ist.

2. Messsystem (1) zum Messen eines Parameters einer montierten Anordnung nach Anspruch 1, wobei die Halbwellendipolantenne (20) aus mindestens zwei Drähten (30) besteht, wobei die Länge des zurückgelegten Pfads L0 entlang jedes Drahts (30) zwischen den folgenden Grenzen liegt:

$$0,5*C/(4*f)< L0< 2,0*C/(4*f),$$

   worin C die Geschwindigkeit der Funkwellen in dem Milieu ist, in das der Draht (30) eingebettet ist, und f die Kommunikationsfrequenz der UHF-Hochfrequenzantenne (20) ist.

3. Messsystem (1) zum Messen eines Parameters einer montierten Anordnung nach Anspruch 2, wobei die Form des mindestens einen Drahts (30) der Halbwellendipolantenne (20) in der Gruppe enthalten ist, die linear, mäanderförmig, gekrümmt, schraubenförmig umfasst.

4. Messsystem (1) zum Messen eines Parameters einer montierten Anordnung nach Anspruch 1, wobei die Dipolantenne (20) mindestens einen eine Schleife bildenden umgebogenen Draht (31, 32) umfasst, wobei der halbe Umfang D des Drahts, der durch die Richtung der Dipolantenne (20) definiert wird, den zurückgelegten Pfad L0 definierend, zwischen den folgenden Grenzen liegt:

$$0,5*C/(4*f) < D< 2,0*C/(4*f)$$

   worin C die Geschwindigkeit der Funkwellen in dem Milieu ist, in das der Draht (31, 32) eingebettet ist, und f die Kommunikationsfrequenz der UHF-Hochfrequenzantenne (20) ist.

5. Messsystem (1) zum Messen eines Parameters einer montierten Anordnung nach Anspruch 4, wobei die Schleife (31, 32) eine Form hat, die in der Gruppe enthalten ist, die Kreis, Ellipse, Oval, Rechteck, Raute, Quadrat und Polygon umfasst.

6. Messsystem (1) zum Messen eines Parameters einer montierten Anordnung nach einem der Ansprüche 4 bis 5, wobei die Schleife (31, 32) mit dem halben Umfang D in die Masseebene (46) integriert ist.

7. Messsystem (1) zum Messen eines Parameters einer montierten Anordnung nach den Ansprüchen 3 bis 6, wobei ein gerichteter Pfad L1 des Drahts (30, 31, 32), der mindestens 50 % des zurückgelegten Pfads L0 des Drahts (30, 31, 32) ausmacht, in die Richtung der UHF-Hochfrequenzantenne (20) gerichtet ist.

8. Messsystem (1) zum Messen eines Parameters einer montierten Anordnung nach Anspruch 7, wobei ein optimaler gerichteter Pfad L2, der mindestens 70 % des gerichteten Pfads L1 des Drahts (30, 31, 32) ausmacht, kontinuierlich ist.

9. Messsystem (1) zum Messen eines Parameters einer montierten Anordnung nach Anspruch 8, wobei der optimale gerichtete Pfad L2 in einem ersten Teil des Drahts (30, 31, 32) lokalisiert ist, der das an dem elektronische Chip (41) befestigte Ende des Drahts umfasst.

10. Messsystem (1) zum Messen eines Parameters einer montierten Anordnung nach einem der vorhergehenden Ansprüche, wobei mindestens ein Teil der Elektronikkarte (40), der Masseebene (46) und der UHF-Hochfrequenzantenne (20) in eine Masse (70) aus Parylen eingebunden sind.

11. Messsystem (1) zum Messen eines Parameters einer montierten Anordnung nach einem der vorhergehenden Ansprüche, wobei die UHF-Hochfrequenzantenne (20) an eine Impedanzanpassungsschaltung (21) angeschlossen ist, die zwischen der UHF-Hochfrequenzantenne (20) und dem elektronischen Chip (41) gelegen ist.

12. Messsystem (1) zum Messen eines Parameters einer montierten Anordnung nach einem der vorhergehenden Ansprüche, wobei die Verbindungsschnittstelle (2) mit mindestens einer durchgehenden Öffnung (3) ausgestattet ist, die das außerhalb des Messsystems gelegene Medium und mindestens einen aktiven Bereich des mindestens einen Messsensors (45) zum Messen eines Parameters der montierten Anordnung in Verbindung bringt.

13. Messsystem (1) zum Messen eines Parameters einer montierten Anordnung nach einem der vorhergehenden Ansprüche, wobei der mindestens eine Messsensor (45) zum Messen eines Parameters der montierten Anordnung in der Gruppe enthalten ist, die Drucksensor, Temperatursensor, Vertikalpositionssensor, Winkelpositionssensor, Beschleunigungssensor umfasst.

**Claims**

1. System (1) for measuring parameters of a mounted assembly consisting of a tyre casing and of at least one wheel, comprising an electronic device (10) for measuring parameters of the mounted assembly and a bonding interface (2) made of elastomeric material surrounding at least partially the measuring electronic device (10) and serving as interface between the tyre casing and the measuring electronic device (10), said measuring electronic device (10) comprising:

   - a UHF radiofrequency antenna (20);
   - an electronic board (40) comprising:

      i. an electronic chip (41) coupled to the UHF radiofrequency antenna (20), the coupling between the electronic chip (41) and the UHF radiofrequency antenna (20) is of electrical nature;
      ii. a microcontroller (44);

      **characterized in that** the measuring system (1) comprises a ground plane (46) connected to the electronic board (40), **in that** the electronic board (40) comprises at least one sensor (45) for measuring parameters of the mounted assembly, a capacitive element (43) and an energy manager (42), **in that** an electrical circuit (47) connects the electronic chip (41), the microcontroller (44) and at least the sensor (45) for measuring parameters of the mounted assembly, **in that** the electronic chip (41), the microcontroller (44) and the at least one sensor (45) for measuring parameters of the mounted assembly are components of low energy consumption **and in that** the UHF radiofrequency antenna (20) is a half-wave dipole monoband antenna the total length L of which is comprised between the following limits:

$$0.9*C/(2*f)< L<\ 1.1*C/(2*f),$$

in which, C is the speed of the radiofrequency waves in the medium in which the UHF radiofrequency antenna (20) is embedded and f is the communication frequency of the UHF radiofrequency antenna (20).

2.  System (1) for measuring parameters of a mounted assembly according to Claim 1, wherein the half-wave dipole antenna (20) consists of at least two strands (30), the length of the path L0 travelled along each strand (30) being comprised between the following limits:

$$0.5*C/(4*f)< L0<\ 2.0*C/(4*f),$$

in which C is the speed of the radiofrequency waves in the medium in which the strand (30) is embedded and f is the communication frequency of the UHF radiofrequency antenna (20).

3.  System (1) for measuring parameters of a mounted assembly according to Claim 2, wherein the shape of the at least one strand (30) of the half-wave dipole antenna (20) is comprised in the group comprising linear, meander, curved, helicoidal.

4.  System (1) for measuring parameters of a mounted assembly according to Claim 1, wherein the dipole antenna (20) comprises at least one folded strand (31, 32) forming a loop the half-perimeter D of the strand of which, defined by the direction of the dipole antenna (20), defining the travelled path L0, is comprised between the following limits:

$$0.5*C/(4*f) < D< 2.0*C/(4*f)$$

where C is the speed of the radiofrequency waves in the medium in which the strand (31, 32) is embedded and f is the communication frequency of the UHF radiofrequency antenna (20).

5.  System (1) for measuring parameters of a mounted assembly according to Claim 4, wherein the loop (31, 32) has a shape comprised in the group comprising circle, ellipse, oval, rectangle, rhombus, square and polygon.

6.  System (1) for measuring parameters of a mounted assembly according to one of Claims 4 to 5, wherein the loop (31, 32) of half-perimeter D is integrated into the ground plane (46).

7.  System (1) for measuring parameters of a mounted assembly according to Claims 3 to 6, wherein an oriented path L1 of the strand (30, 31, 32) representing at least 50% of the travelled path L0 of the strand (30, 31, 32) is oriented in the direction of the UHF radiofrequency antenna (20).

8.  System (1) for measuring parameters of a mounted assembly according to Claim 7, wherein an optimal oriented path L2 representing at least 70% of the oriented path L1 of the strand (30, 31, 32) is continuous.

9.  System (1) for measuring parameters of a mounted assembly according to Claim 8, wherein the optimal oriented path L2 is located in a first portion of the strand (30, 31, 32) comprising the strand end fastened to the electronic chip (41).

10. System (1) for measuring parameters of a mounted assembly according to one of the preceding claims, wherein at least one portion of the electronic board (40), of the ground plane (46) and of the UHF radiofrequency antenna (20) are coated in a mass (70) of parylene.

11. System (1) for measuring parameters of a mounted assembly according to one of the preceding claims, wherein the UHF radiofrequency antenna (20) is connected to an impedance matching circuit (21) located between the UHF radiofrequency antenna (20) and the electronic chip (41).

12. System (1) for measuring parameters of a mounted assembly according to one of the preceding claims, wherein the bonding interface (2) is equipped with at least one through-orifice (3) bringing the fluid located outside said measuring system and at least one active region of the at least one sensor (45) for measuring parameters of the mounted assembly into communication.

13. System (1) for measuring parameters of a mounted assembly according to one of the preceding claims, wherein the at least one sensor (45) for measuring parameters of the mounted assembly is comprised in the group comprising pressure sensor, temperature sensor, vertical position sensor, angular position sensor, accelerometer.

**FIG. 1**

**FIG. 2**

FIG. 3

**FIG. 4**

**RÉFÉRENCES CITÉES DANS LA DESCRIPTION**

**Documents brevets cités dans la description**

- US 2003132893 A1